# EUROPÄISCHE PATENTSCHRIFT

(11) **EP 3 285 036 B1**
(45) Veröffentlichungstag und Bekanntmachung des Hinweises auf die Patenterteilung: **18.11.2020**
(21) Anmeldenummer: 16184132.5
(22) Anmeldetag: 14.08.2016
(51) Int. Cl.: F28D 7/00, F28D 7/08, F28D 7/16, F28F 1/04, F28F 17/00, A23B 7/005, A23B 9/02

(54) **FESTSTOFFWÄRMEAUSTAUSCHERMODUL**
HEAT EXCHANGER MODUL FOR BULK MATERIAL
MODULE D'ÉCHANGEUR DE CHALEUR POUR MATÉRIAU EN VRAC

(43) Veröffentlichungstag der Anmeldung: 21.02.2018
(73) Patentinhaber: Dallmann engineering & Service, 41468 Neuss (DE)
(72) Erfinder: DALLMANN, Winfried, 41468 Neuss (DE)
(74) Vertreter: Fabry, Bernd

(56) Entgegenhaltungen:
- EP-A2- 1 045 215
- EP-B1- 0 934 498
- DE-A1-102006 045 807
- DE-B3-102009 054 354
- DE-C1- 19 643 699
- FR-A1- 2 369 525
- US-A- 3 705 620
- US-A- 3 866 673
- US-A- 4 255 841

## Beschreibung

### GEBIET DER ERFINDUNG

Die Erfindung befindet sich auf dem Gebiet der Verfahrenstechnik und betrifft ein Wärmeaustauschermodul sowie einen Wärmeaustauscher, der mehrere dieser Module aufweist, für die Behandlung von rieselfähigem Schüttgut.

### TECHNOLOGISCHER HINTERGRUND

Wärmeaustauscher zählen zu den wichtigsten Bauteilen im Bereich der Verfahrenstechnik. Sie können dabei unterschiedlichen Zwecken dienen, insbesondere vielfältigste Substrate kühlen, erwärmen oder sogar trocknen. Wärmeaustauscher werden häufig nach der Natur der zu behandelnden Substrate unterschieden, nämlich ob es sich um Gase, Flüssigkeiten oder Feststoffe handelt. Während Gase und Flüssigkeiten naturgemäß ausgezeichnete Strömungseigenschaften aufweisen, trifft dies für Feststoffe gerade nicht zu. Um Feststoffe einem Wärmeaustausch unterwerfen zu können, ohne sie dazu aufzuschmelzen, müssen sie rieselfähig sein. D.h. es kommen nur solche Stoffe in Betracht, die von Natur aus eine Korngrößenverteilung aufweisen, die die Stoffe rieseln, rutschen oder gleiten lassen oder die durch Zerkleinerungsschritte entsprechend zugerichtet werden.

Naturgemäß ist die Behandlung von solchen rieselfähigen Schüttgütern aus Sicht des Anlagenbauers besonders ambitioniert, da mit Durchmesser und Form der Substrate ein Verstopfen der Anlagen jederzeit eintreten kann. Konventionelle Festgut(platten)wärmetauscher müssen zudem mit sauberen Wärm- oder Kühlmedien betrieben werden, um eine Verstopfung der Austauscher zu verhindern. Dies verteuert die Verfahren zusätzlich, zumal in der Regel für die Erwärmung Brüden eingesetzt werden, die zuvor noch kondensiert und gereinigt werden müssen.

### STAND DER TECHNIK

Wärmeaustauscher für rieselfähiges Schüttgut sind aus dem Stand der Technik hinreichend bekannt. So werden beispielsweise in den internationalen Patentanmeldungen WO 2007 128104 A1 und WO 2013 163752 A1 sowie der europäischen Patentanmeldung EP 2995898 A2 (SOLEX) Anlagen beschrieben, bei der die Trocknung des Schüttgutes, das über eine große Aufgabefläche der Schwerkraft folgend aufgegeben wird, über parallel zueinander angeordneten Wärmeaustauscherplatten erfolgt. Nachteilig ist hier, dass das Schüttgut viel zu rasch die Wärmeaustauschzonen durchläuft, so dass die Anlage eine große Höhe aufweisen muss, um ausreichenden Wärmeaustausch zu erzielen. Ein ganz ähnliches Modul mit den gleichen Nachteilen ist Gegenstand der kanadischen Patentanmeldung CA 2851781 AA (SOLEX). Eine Kombination aus zueinander parallel angeordneten Wärmeaustauscherrohren und -platten ist Gegenstand der beiden Patentanmeldungen CA 2857852 AA und US 2016 025417 AA (SOLEX).

Aus der DE 19643699 C1 (BABCOCK) ist ein Schachtkühler bekannt, bei dem das Schüttgut auf eine Prallplatte **rieselt** und fällt dann durch den Stabrost auf die Kühlrohre fällt. Von dieser Schrift geht die in der DE 10 2006 045 807 A1 (Grenzebach) beschriebene Weiterentwicklung aus. Dort ist ein Feststoffwärmeaustauschermodul entsprechend dem Oberbegriff des Anspruchs 1 gezeigt.

Gegenstand der US 3,866,673 A (PAVLOV) ist ein Wärmeaustauscher zur Kühlung von Erzschlacken. Das Schüttgut wird dabei mit Hilfe von Rohrschlangen gekühlt.

In der US 3,705,620 A (KAYATZ) wird eine zweistufige Kühlvorrichtung beschrieben, deren Kernstück ein Schachtkühler mit ungeordneten Rohrbündeln.

Dabei ist jedoch zu berücksichtigen, dass Plattenwärmetauscher bezogen auf das Raumvolumen gegenüber Rohrbündelwärmetauschern zwar die größere Heizfläche aufweisen, aber einen schlechteren Wärmeaustausch zeigen, da das Schüttgut nicht wie im Rohrbündelwärmetauscher von Rohrreihe zu Rohrreihe neu gemischt wird.

### AUFGABE DER ERFINDUNG

Die Aufgabe der vorliegenden Erfindung hat daher darin bestanden, Feststoffwärmeaustauscher für rieselfähige Schüttgüter zur Verfügung zu stellen, die frei von den geschilderten Nachteilen sind. Insbesondere sollten die Bauteile eine hohe Effizienz aufweisen, d.h. pro Volumeneinheit eine gegenüber dem Stand der Technik verbesserte Wärmetauscherleistung aufweisen, sich an Schüttgüter mit unterschiedlichsten Rieseleigenschaften anpassen lassen, einfach in Wartung und Montage sein sowie den Einsatz unterschiedlicher Heiz- oder Kühlmedien, insbesondere von ungereinigten Brüden zulassen.

### BESCHREIBUNG DER ERFINDUNG

Die Aufgabe wird durch den Gegenstand der unabhängigen Ansprüche 1, 9 und 11 gelöst. Ein erster Gegenstand der Erfindung betrifft ein Feststoffwärmeaustauschermodul, umfassend oder bestehend aus
(i) einem Gehäuse zur Aufnahme von Wärmeaustauscherrohren;
(ii) einer Vielzahl von Wärmeaustauscherrohren;
(iii) mindestens einem Stoffeinlass;
(iv) mindestens einem Stoffauslass;
(v) Rohrverbindungen zwischen den Wärmeaustauscherrohren zur Versorgung mit Heiz- oder Kühlmedien,
   wobei
   (a) die Wärmeaustauscherrohre in Bündel gruppiert und dabei jeweils zueinander versetzt angeordnet sind,
   (b) jedes Modul 2 bis 10 Bündel enthält,
   (c) jedes Bündel 10 bis 100 Rohre enthält,
   (d) jedes Rohr einen rechteckigen oder rhombischen Querschnitt mit abgerundeten Kanten mit den Winkeln α, β, γ und δ aufweist, wobei für diese Winkel die Auswahlbedingungen
      α = 30° bis 120°
      β = 60° bis 150°
      γ = 30° bis 120°
      δ = 60° bis 150°
      mit der Maßgabe gelten, dass die Summe aller Winkel 360° ergibt,
   (e) die Rohre im Rohrbündel so angeordnet sind, dass die Winkel β und δ jeweils nach oben und unten und die Winkel α und γ jeweils nach rechts und links weisen, und
   (f) der Abstand D1 zwischen jeweils zwei benachbarten Wärmeaustauscherrohren in einer Reihe sowie der Abstand D2 zwischen jeweils zwei benachbarten Wärmeaustauscherrohren in zwei benachbarten Reihen unabhängig voneinander zwischen 10 und 100 mm betragen,
   mit der Maßgabe, dass das Modul über Rollen verfügt, so dass es im eingebauten Zustand beweglich und ausfahrbar ist.

Die eingangs geschilderte Aufgabe wird mit einem Bauteil wie oben beschrieben vollständig gelöst. Anstelle von Platten kommen ausschließlich Wärmeaustauscherrohre zum Einsatz, die in spezieller Weise angeordnet sind, so dass eine Verstopfung der Anlage ausgeschlossen ist.

Der Querschnitt der Rohre sowie ihr Abstand kann an die Natur des Schüttgutes, insbesondere dessen Böschungswinkel und die gewünschten Durchflussmengen, speziell im Hinblick auf den Wandreibungswinkel angepasst werden. Die Rohre sind quadratisch oder rhombisch mit Rundungen, die an den Böschungswinkel des Schüttgutes angepasst sind, damit der Feststoff möglichst lange um die Rohre herum fließen kann. Auf diese Weise wird die Zeit für den Wärmeaustausch verlängert, was die Effizienz bezogen auf Wärmeübergang pro Volumeneinheit in signifikanter Weise verbessert. Damit lassen sich Wärmeaustauscher herstellen, die deutlich kompakter als die Vergleichsbauteile aus dem Stand der Technik sind und dennoch höhere Wärmeaustauscherleistungen erbringen.

### FESTSTOFFWÄRMEAUSTAUSCHERMODULE

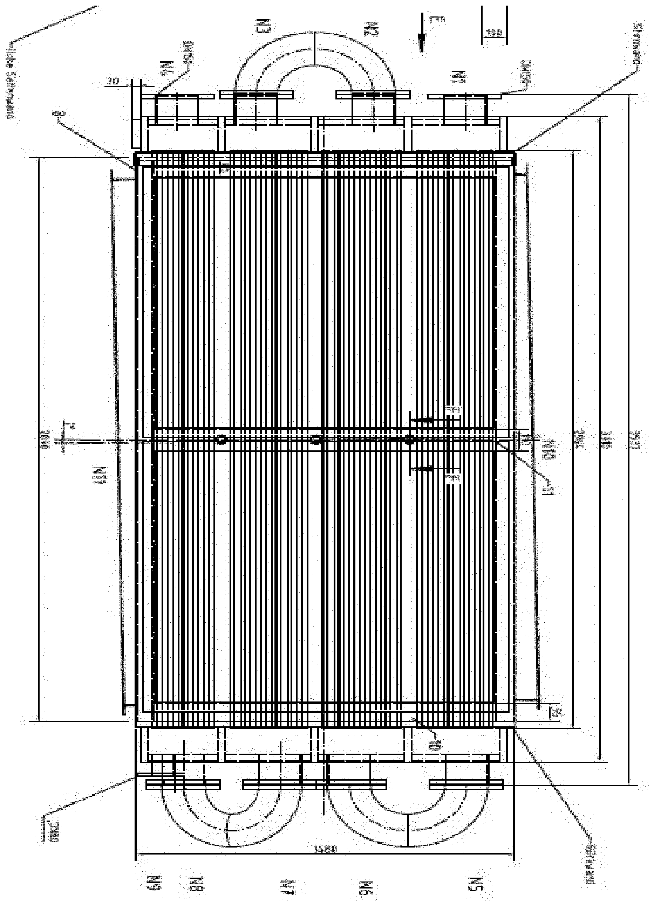

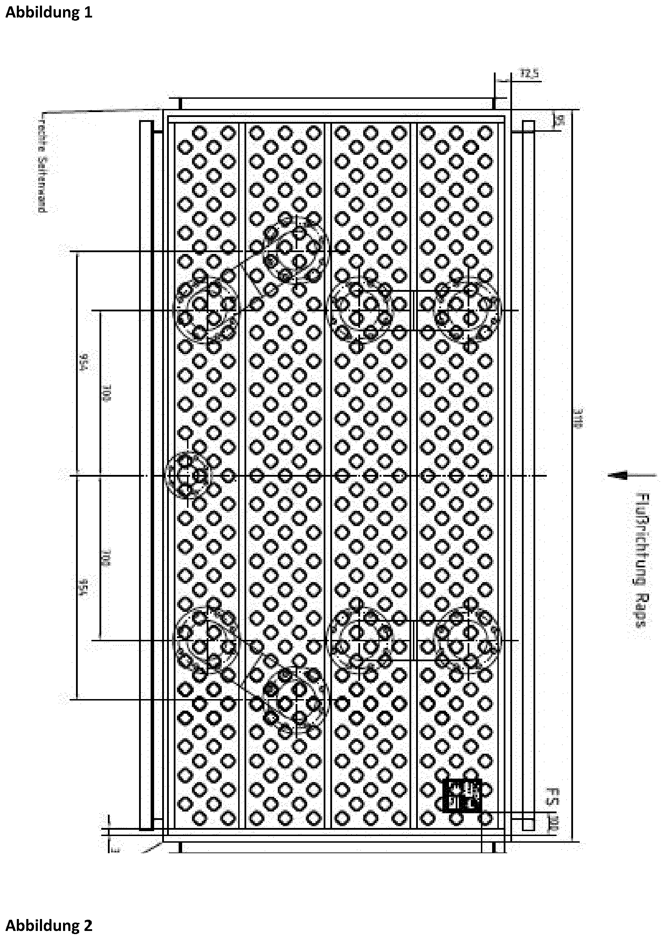

Die Wärmeaustauschermodule enthalten die Wärmeaustauscherrohre in Form von mehreren, vorzugsweise 2 bis etwa 5 Bündeln angeordnet. In jedem Rohrbündel liegen die Rohre in Reihen übereinander angeordnet vor. Vorzugsweise enthalten die Bündel 2 bis etwa 10 und insbesondere etwa 4 bis etwa 6 Reihen mit jeweils etwa 10 bis etwa 50 und insbesondere jeweils etwa 20 bis 50 Rohren wie in **Abbildung 1** dargestellt. Bezogen auf die Rohrreihen in den Bündeln liegen die Rohre jeweils auf Lücke zueinander versetzt vor, wie dies in **Abbildung 2** wiedergegeben ist. Die Angaben zu Rohren und Rohrbündeln sind als bevorzugte und typische Ausführungsformen zu verstehen. Es ist grundsätzlich möglich, auch größere Anlagen herzustellen, die dann über entsprechend größere Zahlen an Rohren und Rohrbündeln verfügen.

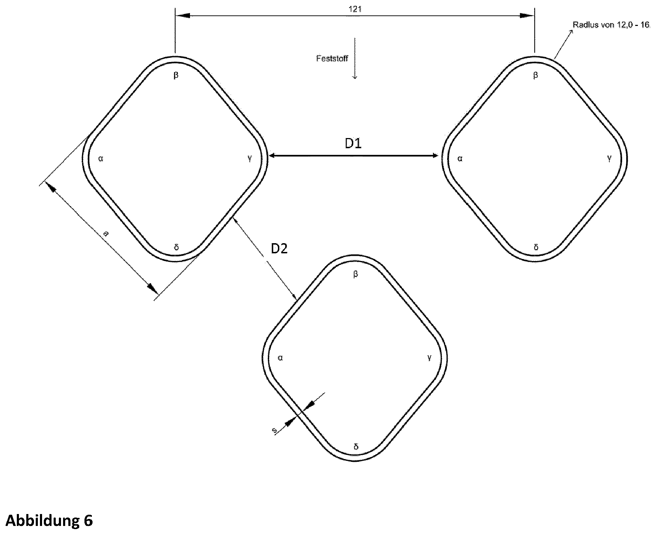

Der Abstand D1 zwischen jeweils zwei benachbarten Wärmeaustauscherrohren in einer Reihe sowie der Abstand D2 zwischen jeweils zwei benachbarten Wärmeaustauscherrohren in zwei benachbarten Reihen beträgt unabhängig voneinander etwa 10 und etwa 100 mm und vorzugsweise etwa 40 bis etwa 60 mm (vgl. auch **Abbildung 6**).

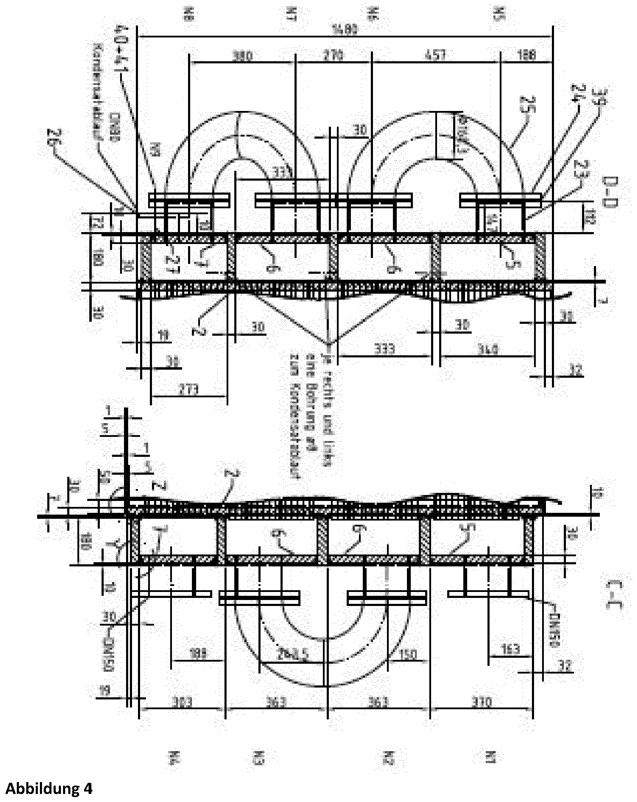

Die Wärmeaustauscherrohre sind entweder einzeln, vorzugsweise aber bündelweise an einen Verteiler angeschlossen, über den die Heiz- oder Kühlflüssigkeiten eingespeist werden können (s. **Abbildung 1****,** bogenförmige Verbindungen ober- und unterhalb der Rohrbündel; **Abbildung 2****,** kreisförmige Gebilde, die den Anschnitt der Verteiler zeigen sowie **Abbildung 4).** Dabei können die Rohrbündel jeweils über einen Verteiler gemeinsam betrieben werden; es ist jedoch auch möglich, alle Bündel und damit alle Rohre gemeinsam über einen Haupt- und gegebenenfalls weitere Nebenverteiler mit den Medien zu versorgen.

Die Wärmeaustauscherrohre können mit Flüssigkeiten, Dämpfen, Gasen, Kühlwasser und entsprechenden Mischungen beheizt oder gekühlt werden. Insbesondere werden sie jedoch mit ungereinigten Brüden betrieben, was die Durchführung besonders einfach und kostengünstig gestaltet. Auf diese Weise kann auf den Rohrinnenseiten die Kondensationswärme des Wasserdampfes über 100 °C direkt genutzt werden. Würden die Brüdendämpfe hingegen zur Herstellung von Heißwasser verwendet, ließen sich nur Temperaturen von 60 bis 65 °C erreichen.

### WÄRMEAUSTAUSCHERROHRE

Auch wenn die Wärmeaustauscherrohre grundsätzlich einen runden oder ovalen Durchmesser haben können, ist ihr Profil gemäß der Erfindung rechteckig oder rhombisch, wobei die Kanten abgerundet sind, damit das Schüttgut möglichst lange um das Rohr herum fließen kann und der Wärmeaustausch dadurch verlängert wird.

Offenbart wird daher weiterhin ein Wärmeaustauscherrohr, welches sich dadurch auszeichnet, dass es ein rechtwinkliges oder rhombisches Profil mit den Winkeln α, β, γ und δ aufweist, wobei für diese Winkel die Auswahlbedingungen gelten
α = 30° bis 120°
β = 60° bis 150°
γ = 30° bis 120°
δ = 60° bis 150°
mit der Maßgabe, dass die Summe aller Winkel 360° ergibt (vgl. **Abbildung 6**). In einer ersten bevorzugten Ausführungsform sind die vier Winkel gleich und betragen 90°, in einer zweiten Ausführungsform sind jeweils zwei gegenüberliegende Winkel zum einem etwa 80° und zum anderen etwa 100°. Der Einbau der Rohre in das Modul erfolgt jeweils so, dass die gegenüberliegenden kleineren Winkel des Rohrquerschnitts in Richtung der Flussrichtung weisen.

Der Durchmesser der Wärmeaustauscherrohre (d1) ist wenig kritisch und kann typisch zwischen etwa 20 und etwa 100 mm, vorzugsweise zwischen etwa 30 und etwa 80 mm und insbesondere zwischen etwa 40 und etwa 60 mm liegen. Die Länge der Rohre richtet sich nach den Abmessungen des Wärmetauschermoduls und kann zwischen 1 und 20 Metern betragen. Verwendung finden vor allem hoch verschleiß- und korrosionsfeste handelsübliche Stähle und Sonderstähle.

### FESTSTOFFWÄRMEAUSTAUSCHER

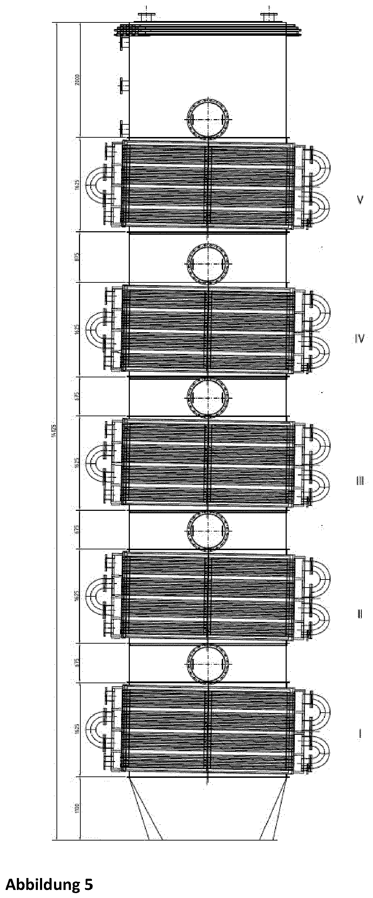

Ein weiterer Gegenstand der Erfindung betrifft einen Feststoffwärmeaustauscher enthaltend oder bestehend aus mindestens zwei, vorzugsweise 3, 4, 5 oder bis zu 10 der oben beschriebenen Module, wobei die Module übereinander angeordnet sind. Eine Darstellung eines Wärmeaustauschers mit fünf Modulen ist in **Abbildung 5** wiedergegeben.

Dabei wird das Schüttgut am Kopf des Wärmeaustauschers, konkret am Kopf des obersten Austauschermoduls aufgegeben (**Abbildung 5**, oben). Dies kann über ein Schott oder eine Luke erfolgen, beispielsweise durch kontinuierliches Einbringen über ein Förderband. Das Schüttgut kann jedoch ebenfalls über die gesamte zur Verfügung stehende Fläche des Moduls aufgegeben werden. Das Ausbringen des behandelten Schüttgutes erfolgt am Boden des Wärmeaustauschers bzw. des untersten Moduls beispielsweise durch eine Schleuse **(****Abbildung 5**, unten). Es kommen auch andere übliche Austragsförderer in Betracht, deren Anzahl sich nach dem Querschnitt der gewählten Schachtabmessungen richtet.

Die einzelnen Module sind vorzugsweise über Zwischenkästen mit oder ohne Brüdenabsaugung miteinander verbunden **(****Abbildung 5**, Bauteile zwischen den Modulen), so dass sie angekoppelt und abgekoppelt werden können. Dazu sind sie vorzugsweise über Rollen beweglich und ausfahrbar. Auf diese Weise wird erreicht, dass man ein Modul, das ausgewechselt und gewartet oder repariert werden muss, einfach ausfahren und den Wärmetauscher dennoch weiter betreiben kann. Ebenfalls bevorzugt ist es, die Module mit Neigungswinkel gekippt anzuordnen. Auf diese Weise reinigen sich die Rohre im Innenraum durch die kondensierten Gase durch Waschung selbst. Die Kondensate werden an den Tiefpunkten gesammelt und abgeführt.

Es ist weiter ebenfalls vorteilhaft, die Zwischenkästen mit Mannlöchern auszustatten, durch die eine weitere mechanische Reinigung der Rohrbündelwärmetauscher entlang der Rohrgassen - falls erforderlich - erfolgen kann.

Die gesamte Konstruktion kann unter Verwendung von hoch verschleiß- und korrosionsfesten handelsüblichen- und Sonderstählen hergestellt werden. Die Ausführung kann je nach Materialstärke druckfest sein, auch z.B. 13 bar Überdruck durch die Rohre (Nachweis über die Berechnung mit der Methode Finite Elemente).

### GEWERBLICHE ANWENDBARKEIT

Ein weiterer Gegenstand der Erfindung betrifft ein Verfahren zur Behandlung von rieselfähigem Schüttgut, insbesondere zu dessen Erwärmen oder Kühlen, bei dem man dieses einem Wärmeaustausch unter Einsatz mindestens eines Feststoffwärmeaustauschermoduls wie vorstehend erläutert unterwirft. Dabei kann Schüttgut eingesetzt werden, welches ausgewählt ist aus der Gruppe, die gebildet wird von Saaten, Sanden und Polymerschroten oder anderen Stoffen bzw. rieselfähigen Schüttgütern, die beheizt oder gekühlt werden sollen.

Ein letzter Gegenstand der Erfindung betrifft die Verwendung eines Wärmeaustauschermoduls wie vorstehend erläutert zur Behandlung von rieselfähigem Schüttgut.

Die Erfindung wird nachfolgend an Hand von 6 Zeichnungen näher erläutert ohne sie darauf einzuschränken.

### BEISPIELE

### Beispiel 1

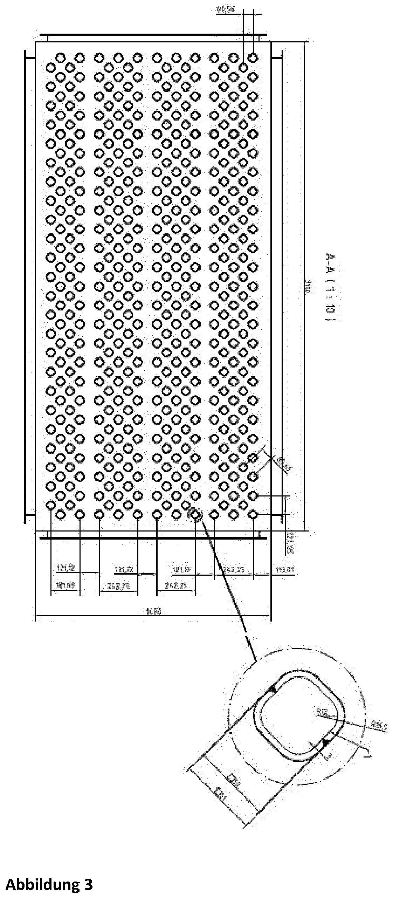

Die Vorwärmung von Rapssaat (mittlerer Durchmesser pro Partikel: ca 2 mm) wurde in einem erfindungsgemäßen Feststoffwärmeaustauscher vom Rohrbündeltyp durchgeführt, der insgesamt 5 Module enthielt und eine Höhe von 20 m aufwies. Jedes Modul enthielt 5 Bündel an Wärmeaustauscherrohren, die pro Bündel versetzt zueinander in jeweils 4 Reihen zu jeweils 20 Rohren angeordnet waren (analog **Abbildungen 2 und 3**). Der Durchmesser der Rohre betrug 51 mm, die Abstände D1 und D2 jeweils 43 mm. Die Rohre selbst wiesen ein rhombisches Profil auf, mit den folgenden Winkeln:
α = 80°
β = 100°
γ = 80°
δ = 100°

Das Schüttgut wies bei der Aufgabe auf den Wärmeaustauscher eine Temperatur von 25 °C und eine Feuchte von 9 Gew.-% auf. Der Austauscher wurde mit ungereinigten Brüden (aus der Saatkonditionierung und Schrottrocknung sowie Brüdenwasser mit einer Temperatur von ca. 60 °C betrieben. Am Auslass wies das Schüttgut eine Temperatur von 50°C und eine Restfeuchte von 8 Gew.-% auf.

### Beispiel 2

Die Vorwärmung von gebrochenen Sojabohnen (größte Länge: ca 6 mm) wurde in einem erfindungsgemäßen Feststoffwärmeaustauscher vom Rohrbündeltyp durchgeführt, der insgesamt 5 Module enthielt und eine Höhe von 20 m aufwies. Jedes Modul enthielt 5 Bündel an Wärmeaustauscherrohren, die pro Bündel versetzt zueinander in jeweils 4 Reihen zu jeweils 20 Rohren angeordnet waren (analog **Abbildungen 2 und 3**). Der Durchmesser der Rohre betrug 51 mm, die Abstände D1 und D2 jeweils 43 mm. Die Rohre selbst wiesen ein rhombisches Profil auf, mit den folgenden Winkeln:
α = 80°
β = 100°
γ = 80°
δ = 100°

Das Schüttgut wies bei der Aufgabe auf den Wärmeaustauscher eine Temperatur von 25 °C und eine Feuchte von 8 Gew.-% auf. Der Austauscher wurde mit ungereinigten Brüden (aus der Saatkonditionierung und Schrottrocknung sowie Brüdenwasser mit einer Temperatur von ca. 100 °C betrieben. Am Auslass wies das Schüttgut eine Temperatur von 50°C und eine Restfeuchte von 7,5 Gew.-% auf.

### BESCHREIBUNG DER ABBILDUNGEN

**Abbildung 1**
   Vertikaler Schnitt durch ein Wärmeaustauschermodul mit 4 Rohrgruppen. Die Flussrichtung des Schüttgutes verläuft von rechts nach links.
**Abbildung 2**
   Horizontaler Schnitt durch ein Wärmeaustauschermodul mit 5 Rohrgruppen. Die Flussrichtung des Schüttgutes verläuft von rechts nach links.
**Abbildung 3**
   1 Bündel mit 4 Rohrgruppen. Dargestellt ist ferner das Profil eines Wärmeaustauscherrohres.
**Abbildung 4**
   Detail des Verteilerkopfes
**Abbildung 5**
   Anordnung von 5 Wärmeaustauschermodulen in einem Verbund.
**Abbildung 6**
   Querschnitt einer Anordnung von 3 Wärmeaustauscherrohren in zwei benachbarten Reihen

## Patentansprüche

1. Feststoffwärmeaustauschermodul, umfassend oder bestehend aus
(i) einem Gehäuse zur Aufnahme von Wärmeaustauscherrohren;
(ii) einer Vielzahl von Wärmeaustauscherrohren;
(iii) mindestens einem Stoffeinlass;
(iv) mindestens einem Stoffauslass;
(v) Rohrverbindungen zwischen den Wärmeaustauscherrohren zur Versorgung mit Heiz- oder Kühlmedien,
wobei
(a) die Wärmeaustauscherrohre in Bündel gruppiert und dabei jeweils zueinander versetzt angeordnet sind,
(b) jedes Modul 2 bis 10 Bündel enthält,
(c) jedes Bündel 10 bis 100 Rohre enthält,
(d) jedes Rohr einen rechteckigen oder rhombischen Querschnitt mit abgerundeten Kanten mit den Winkeln α, β, γ und δ aufweist, wobei für diese Winkel die Auswahlbedingungen
α = 30° bis 120°
β = 60° bis 150°
γ = 30° bis 120°
δ = 60° bis 150°
mit der Maßgabe gelten, dass die Summe aller Winkel 360° ergibt,
(e) die Rohre im Rohrbündel so angeordnet sind, dass die Winkel β und δ jeweils nach oben und unten und die Winkel α und γ jeweils nach rechts und links weisen, und
(f) der Abstand D1 zwischen jeweils zwei benachbarten Wärmeaustauscherrohren in einer Reihe sowie der Abstand D2 zwischen jeweils zwei benachbarten Wärmeaustauscherrohren in zwei benachbarten Reihen unabhängig voneinander zwischen 10 und 100 mm betragen,
**dadurch gekennzeichnet, dass** das Modul über Rollen verfügt, so dass es im eingebauten Zustand beweglich und ausfahrbar ist.

2. Modul nach Anspruch 1, **dadurch gekennzeichnet, dass** die Wärmeaustauscherrohre in den Bündeln jeweils auf Lücke zueinander versetzt in 2 bis 10 Reihen angeordnet sind.

3. Modul nach den Ansprüchen 1 und/oder 2, **dadurch gekennzeichnet**, die Wärmeaustauscherrohre in den Bündel jeweils einen Durchmesser d1 im Bereich von 20 bis 100 mm aufweisen.

4. Modul nach mindestens einem der Ansprüche 1 bis 3, **dadurch gekennzeichnet, dass** die Wärmeaustauscherrohre über einen Verteiler zur Aufnahme der Heiz- oder Kühlflüssigkeit verbunden sind.

5. Modul nach mindestens einem der Ansprüche 1 bis 4, **dadurch gekennzeichnet, dass** die Wärmeaustauscherrohre mit Flüssigkeiten, Dämpfen, Frischdampf, Gasen, Kühlwasser und entsprechenden Mischungen beheizt oder gekühlt werden.

6. Modul nach mindestens einem der Ansprüche 1 bis 5, **dadurch gekennzeichnet, dass** die Wärmeaustauscherrohre mit ungereinigten Brüden beheizt werden.

7. Feststoffwärmeaustauscher enthaltend oder bestehend aus mindestens zwei Modulen nach Anspruch 1, wobei die Module im Austauscher übereinander angeordnet sind.

8. Wärmeaustauscher nach Anspruch 7, **dadurch gekennzeichnet, dass** die Module über Zwischenkästen miteinander verbunden sind.

9. Verfahren zur Behandlung von rieselfähigem Schüttgut, bei dem man das Schüttgut einem Wärmeaustausch unter Einsatz eines Feststoffwärmeaustauschers mit mindestens zwei ausfahrbaren Feststoffwärmeaustauschermodulen nach Anspruch 1 unterwirft.

10. Verfahren nach Anspruch 9, **dadurch gekennzeichnet, dass** man Schüttgut einsetzt, welches ausgewählt ist aus der Gruppe, die gebildet wird von Saaten, Sanden und Polymerschroten.

11. Verwendung eines Wärmeaustauschermoduls nach Anspruch 1 zur Behandlung von rieselfähigem Schüttgut.

## Claims

1. A solid state heat exchanger module comprising or consisting of
(i) a closed housing to accommodate heat exchanger tubes;
(ii) a plurality of heat exchanger tubes;
(iii) at least one material inlet;
(iv) at least one stock outlet;
(v) tube connections between the heat exchanger tubes for the supply of heating or cooling media,
where
(a) the heat exchanger tubes are grouped in bundles and offset from each other;
(b) each module contains 2 to 10 bundles;
(c) each bundle contains 10 to 100 pipes;
(d) each tube has a rectangular or rhombic cross-section with rounded edges with angles α, β, γ and δ, for which angles the selection conditions are
α = 30° to 120°
β = 60° to 150
γ = 30° to 120°
δ = 60° to 150
with the proviso that the sum of all angles is 360°,
(e) the tubes are arranged in the tube bundle in such a way that the angles β and δ each point up and down and the angles α and γ each point right and left, and
(f) the distance d1 between each two adjacent heat exchanger tubes in a row and the distance d2 between each two adjacent heat exchanger tubes in two adjacent rows is independently between 10 and 100 mm,
provided that the module has rollers so that it can be moved and extended when installed.

2. Module according to claim 1, **characterized in that** the heat exchanger tubes in the bundles are arranged in 2 to 10 rows, each offset to each other in a gap.

3. Module according to claims 1 and/or 2, **characterized in that** the heat exchanger tubes in the bundles each have a diameter d1 in the range from 20 to 100 mm.

4. Module according to at least one of claims 1 to 3, **characterized in that** the heat exchanger tubes are connected via a distributor for receiving the heating or cooling liquid.

5. Module according to at least one of claims 1 to 4, **characterized in that** the heat exchanger tubes are heated or cooled with liquids, vapors, live steam, gases, cooling water and corresponding mixtures.

6. Module according to at least one of claims 1 to 5, **characterized in that** the heat exchanger tubes are heated with uncleaned vapors.

7. Solid heat exchangers containing or consisting of at least two modules according to claim 1, wherein the modules are arranged one above the other in the exchanger.

8. Heat exchanger according to claim 7, **characterized in that** the modules are connected to each other via intermediate boxes.

9. A process for treating free-flowing bulk material, in which the bulk material is subjected to a heat exchange using a solid heat exchanger with at least two extendable solid heat exchanger modules according to claim 1.

10. A process according to claim 9, **characterized in that** bulk material is used which is selected from the group formed by seeds, sands and polymer meals.

11. The use of a heat exchanger module according to claim 1 for the treatment of pourable bulk material.

## Revendications

1. Module d'échangeur de chaleur pour matières solides, comprenant ou étant composé de
(i) un boîtier pour loger des tubes d'échangeur de chaleur ;
(ii) une pluralité de tubes d'échangeur de chaleur ;
(iii) au moins une entrée de matière ;
(iv) au moins une sortie de matière ;
(v) des raccords de tubes entre les tubes d'échangeur de chaleur pour l'alimentation en agents chauffants ou réfrigérants,
dans lequel
(a) les tubes d'échangeur de chaleur sont regroupés par faisceaux tout en étant disposés de manière décalée les uns par rapport aux autres respectivement,
(b) chaque module contient de 2 à 10 faisceaux,
(c) chaque faisceau contient de 10 à 100 tubes,
(d) chaque tube présente une section transversale rectangulaire ou en forme de losange à bords arrondis ayant des angles α, β, γ et δ, les conditions de sélection
α = de 30° à 120°
β = de 60° à 150°
γ = de 30° à 120°
δ = de 60° à 150°
s'appliquant à ces angles à condition que la somme de tous les angles donne 360°,
(e) les tubes dans le faisceau de tubes sont disposés de telle sorte que les angles β et δ sont respectivement orientés vers le haut et vers le bas et les angles α et γ sont respectivement orientés vers la droite et vers la gauche, et
(f) la distance D1 entre respectivement deux tubes d'échangeur de chaleur voisins sur une rangée, ainsi que la distance D2 entre respectivement deux tubes d'échangeur de chaleur voisins sur deux rangées voisines sont comprises entre 10 et 100 mm indépendamment l'une de l'autre,
**caractérisé en ce que** le module dispose de rouleaux de sorte qu'il est mobile et extensible à l'état installé.

2. Module selon la revendication 1, **caractérisé en ce que** les tubes d'échangeur de chaleur dans les faisceaux sont respectivement disposés en quinconce les uns par rapport aux autres sur 2 à 10 rangées.

3. Module selon les revendications 1 et/ou 2, **caractérisé en ce que** les tubes d'échangeur de chaleur présentent dans les faisceaux respectivement un diamètre d1 dans la plage de 20 à 100 mm.

4. Module selon au moins l'une des revendications 1 à 3, **caractérisé en ce que** les tubes d'échangeur de chaleur sont raccordés par un collecteur pour recevoir le liquide chauffant ou réfrigérant.

5. Module selon au moins l'une des revendications 1 à 4, **caractérisé en ce que** les tubes d'échangeur de chaleur sont chauffés ou refroidis par des liquides, des vapeurs, de la vapeur vive, des gaz, de l'eau de refroidissement et des mélanges respectifs.

6. Module selon au moins l'une des revendications 1 à 5, **caractérisé en ce que** les tubes d'échangeur de chaleur sont chauffés par des fumées brutes.

7. Echangeur de chaleur pour matières solides, comprenant ou composé d'au moins deux modules selon la revendication 1, les modules dans l'échangeur étant disposés les uns au-dessus des autres.

8. Echangeur de chaleur selon la revendication 7, **caractérisé en ce que** les modules sont reliés les uns aux autres par des boîtes intermédiaires.

9. Procédé de traitement de matières coulantes en vrac, la matière en vrac étant soumise à un échange de chaleur en utilisant un échangeur de chaleur pour matières solides comprenant au moins deux modules d'échangeur de chaleur pour matières solides extensibles selon la revendication 1.

10. Procédé selon la revendication 9, **caractérisé en ce qu'**une matière en vrac est mise en œuvre qui est sélectionnée dans le groupe formé par des semis, des sables et de la grenaille polymère.

11. Utilisation d'un module d'échangeur de chaleur selon la revendication 1 pour traiter des matières coulantes en vrac.
